Europäisches Patentamt

European Patent Office

Office européen des brevets

(11) Veröffentlichungsnummer: **0 129 085**
B1

(12) # EUROPÄISCHE PATENTSCHRIFT

(45) Veröffentlichungstag der Patentschrift:
15.04.87

(51) Int. Cl.⁴ : **F 16 K 35/06**

(21) Anmeldenummer: **84105810.0**

(22) Anmeldetag: **22.05.84**

(54) Einrichtung zur Verriegelung einer vorgewählten Spindel-Hubstellung einer Absperrarmatur.

(30) Priorität: 21.06.83 DE 3322179

(43) Veröffentlichungstag der Anmeldung:
27.12.84 Patentblatt 84/52

(45) Bekanntmachung des Hinweises auf die Patenterteilung: 15.04.87 Patentblatt 87/16

(84) Benannte Vertragsstaaten:
AT BE CH FR GB IT LI LU NL SE

(56) Entgegenhaltungen:
DE-A- 3 221 158
DE-C- 3 125 347

(73) Patentinhaber: Klein, Schanzlin & Becker Aktiengesellschaft
Johann-Klein-Strasse 9
D-6710 Frankenthal (DE)

(72) Erfinder: Segenschmidt, Manfred
Schmalespanstrasse 3
D-8820 Gunzenhausen (DE)
Erfinder: Moosburger, Klaus
Klosterweg 71 c
D-8500 Nürnberg 60 (DE)

(74) Vertreter: Furkert, Diethelm
KSB AG Patentabteilung Postfach 225
D-6710 Frankenthal (DE)

## Beschreibung

Die Erfindung betrifft eine Einrichtung zur Verriegelung einer vorgewählten Spindel-Hubstellung einer Absperrarmatur, die über eine drehbare, nichtsteigende Antriebsbüchse zu betätigen ist, mit einem die Antriebsbüchse umschließenden Gewindering, der nach dem Eingriff eines verschiebbaren Elements in innerhalb des Betätigungsmechanismus vorgesehene, axial verlaufende Ausnehmungen durch Drehung der Antriebsbüchse innerhalb eines auf dem Bügelkopf der Absperrarmatur befestigten Verriegelungsgehäuses auf- und abwärts bewegbar und durch einen mittels eines Schlüssels zu betätigenden Sperriegel axial blockierbar ist.

Eine derartige Einrichtung ist durch die DE-C-3 125 347 bekannt. Bei dieser Einrichtung wird der auf einem Außengewinde der Antriebsbüchse angeordnete Gewindering durch eine im Verriegelungsgehäuse, also im feststehenden Teil, angeordnete Halteblockverzahnung gegen Verdrehen gesichert. Bei einer Drehung der Antriebsbüchse führt somit der Gewindering nur eine Auf- oder Abwärtsbewegung durch. Der Verriegelung der Armatur dient eine auf der Außenseite des Gewinderinges umlaufende Nut, in die ein verschließbarer Sperriegel einzugreifen vermag. Da der Sperriegel die gleiche Höhe wie die umlaufende Nut besitzt, ergibt sich nach einer Verriegelung eine axiale Blockierung des Gewinderinges. Weil aber auf diese Weise keine radiale Blockierung möglich ist, können aufgrund der im Betätigungsmechanismus vorhandenen Spiele, die sich mit der Zeit noch vergrößern, durch Drehen des Handrades noch geringe axiale Spindelbewegungen erzeugt werden. Da sich hierdurch ebenfalls geringfügige Verschlußstückbewegungen ergeben, ist es nicht ausgeschlossen, daß eine in der Schließstellung blockierte Absperrarmatur um einen kleinen Betrag geöffnet wird. Dies kann in sicherheitsrelevanten Bereichen zu ernsten Folgen führen.

Der Erfindung liegt die Aufgabe zugrunde, eine Einrichtung der eingangs genannten Art zu schaffen, bei der in der Verriegelungsstellung jedwede Handradbewegung, also auch leichteste Spindel- und Verschlußstückbewegungen ausgeschlossen sind.

Die gestellte Aufgabe wird durch eine Kombination folgender Merkmale gelöst :

a) Der Gewindering ist mit einem Außengewinde versehen und in einem Innengewinde des Verriegelungsgehäuses drehbar und auf- und abwärts bewegbar angeordnet,

b) das verschiebbare Element hat die Form einer Paßfeder, ist lösbar in dem Gewindering befestigt und greift in eine von mehreren über den Umfang verteilten axialen Ausnehmungen der Antriebsbüchse ein,

c) die Paßfeder und deren Befestigung sind über eine im Verriegelungsgehäuse vorgesehene, verschließbare Öffnung zugänglich,

d) der Gewindering ist mit einer Öffnung versehen, in die ein formschlüssig angepaßter Sperriegel zur Verriegelung in axialer Richtung und in Umfangsrichtung einzurasten vermag.

Durch den formschlüssig in eine Öffnung des Gewinderinges eingreifenden Sperriegel wird sichergestellt, daß in den Gewinden und Führungen des Verstellmechanismus und der Verriegelungseinrichtung vorhandene Spiele keinen Einfluß auf die Verriegelung gewinnen können.

Eine vorteilhafte Ausgestaltung des Erfindungsgegenstandes ergibt sich durch ein im Verriegelungsgehäuse angeordnetes Sichtfenster, welches mit einer Markierung versehen ist, die mit einer entsprechenden, auf der Außenseite des Gewinderinges vorgesehenen Markierung bei Erreichen der Verriegelungsstellung zur Deckung gelangt. Hierdurch wird ein schnelles exaktes Anfahren der Verriegelungsstellung ermöglicht.

Anhand eines Ausführungsbeispieles wird die Erfindung näher erläutert. Die Zeichnung zeigt in

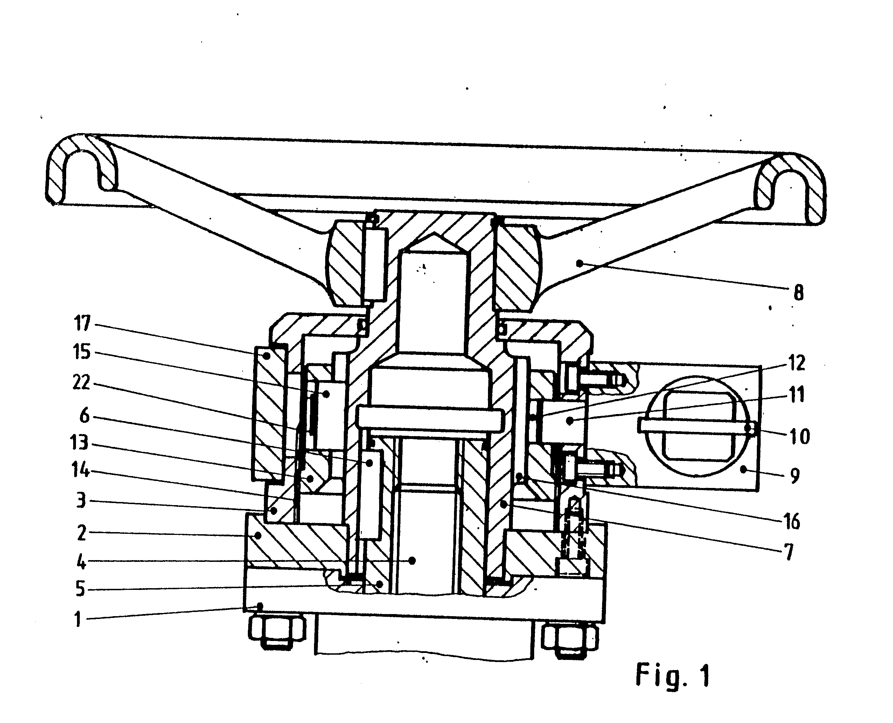

Figur 1 einen Längsschnitt durch eine erfindungsgemäß gestaltete Verriegelungseinrichtung, in

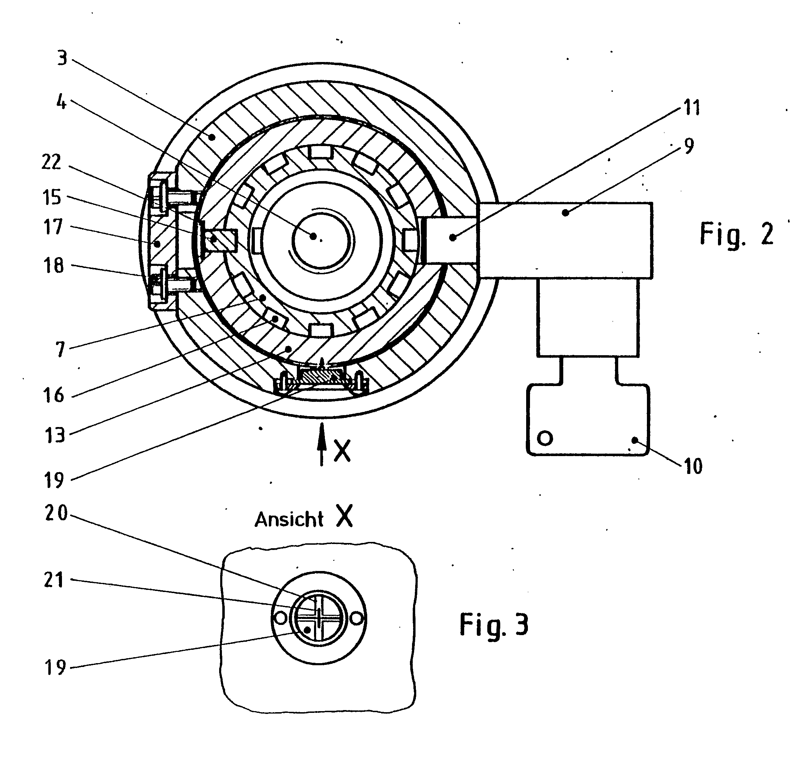

Figur 2 einen Querschnitt der in der Fig. 1 dargestellten Einrichtung, und in

Figur 3 als Einzelheit ein im Verriegelungsgehäuse angeordnetes Sichtfenster mit Markierungen.

Auf einem Bügelkopf 1 einer — nicht dargestellten — Absperrarmatur ist eine Grundplatte 2 eines Verriegelungsgehäuses 3 befestigt.

Die Verstellung der Spindel 4 der Armatur erfolgt über eine Gewindebüchse 5 und eine über eine Paßfeder 6 formschlüssig mit dieser verbundene Antriebsbüchse 7 durch ein auf der Antriebsbüchse 7 befestigtes Handrad 8.

Der Verriegelung der Armatur dient zunächst ein am Verriegelungsgehäuse 3 befestigtes Schloß 9 mit einem abziehbaren Schlüssel 10. Der als Bolzen ausgebildete Sperriegel 11 des Schlosses 9 greift in der Verriegelungsstellung in eine durch Bohren entstandene Öffnung 12 eines Gewinderinges 13 ein. Der Gewindering 13 besitzt ein Außengewinde, er ist innerhalb eines im Verriegelungsgehäuse 3 vorgesehenen Innengewindes 14 drehend und gleichzeitig steigend bewegbar.

Eine im Gewindering 13 mittels eines Sicherungsringes 22 befestigte Paßfeder 15 ist in einer von mehreren axialen Ausnehmungen 16 geführt, die am Umfang der Antriebsbüchse 7 angeordnet sind. Hierdurch bedingt, wird eine Links- oder Rechtsdrehung des Handrades 8 zu einer Drehung und einer Auf- oder Abwärtsbewegung des Gewinderinges 13 führen.

Die Paßfeder 15 und der Sicherungsring 22 sind über eine mittels eines Deckels 17 verschließbare Öffnung im Verriegelungsgehäuse 3 zugänglich. Zur Befestigung des Deckels 17 dienen mittels eines unter Verschluß zu haltenden Spezialschlüssels zu drehende Schrauben 18.

Im Verriegelungsgehäuse 3 ist ein Sichtfenster 19 vorgesehen, welches eine Fadenkreuzmarkierung 20 besitzt. Ein weiteres Fadenkreuz 21 ist auf dem Gewindering 13 angeordnet. Die beiden Fadenkreuze 20 und 21 gelangen in der Verriegelungsstellung zur Deckung. Dies erlaubt ein schnelles und exaktes Ansteuern der Verriegelungsstellung.

Die Verriegelungsstellung ist über den gesamten Hub der Armatur beliebig vorwählbar. Zum Einstellen einer anderen als der bestehenden Verriegelungsstellung geht man folgendermaßen vor :

Zunächst wird die Verriegelung mit dem Sperriegel 11 in der vorhandenen Stellung vorgenommen. Nach dem Abnehmen des Deckels 17 werden der Sicherungsring 22 und die Paßfeder 15 gelöst und aus dem Gewindering 13 herausgezogen. Die Verbindung zwischen der Antriebsbüchse 7 und dem Gewindering 13 ist nun gelöst. Die Armaturenspindel 4 wird jetzt durch Drehen des Handrades 8 in die gewünschte neue Verriegelungsposition gebracht. Während der Drehung der Antriebsbüchse 7 verbleibt der durch den Sperriegel 11 gehaltene Gewindering 13 in seiner ursprünglichen Lage.

Durch Einschieben und Sichern der Paßfeder 15 werden die Antriebsbüchse 7 und der Gewindering 13 wieder formschlüssig verbunden. Nach dem Befestigen des Deckels 17 ist der Einstellvorgang beendet. Die Armatur ist jetzt in der neu eingestellten Lage verriegelt. Nach Entriegeln des Schlosses 9 kann die Armaturenspindel 4 frei bewegt werden. Eine Verriegelung kann nur in der neu eingestellten Lage erfolgen.

## Patentansprüche

1. Einrichtung zur Verriegelung einer vorgewählten Spindel-Hubstellung einer Absperrarmatur, die über eine drehbare, nichtsteigende Antriebsbüchse (7) zu betätigen ist, mit einem die Antriebsbüchse umschließenden Gewindering (13), der, nach dem Eingriff eines verschiebbaren Elements (15) in innerhalb des Betätigungsmechanismus vorgesehene, axial verlaufende Ausnehmungen (16), durch Drehung der Antriebsbüchse (7) innerhalb eines auf dem Bügelkopf der Absperrarmatur befestigten Verriegelungsgehäuses (3) auf- und abwärts bewegbar und durch einen mittels eines Schlüssels (10) zu betätigenden Sperriegel (11) axial blockierbar ist, gekennzeichnet durch die Kombination folgender Merkmale :

a) Der Gewindering (13) ist mit einem Außengewinde versehen und in einem Innengewinde (14) des Verriegelungsgehäuses (3) drehbar und auf- und abwärts bewegbar angeordnet,

b) das verschiebbare Element hat die Form einer Paßfeder (15), ist lösbar in dem Gewindering (13) befestigt und greift in eine von mehreren über den Umfang verteilten axialen Ausnehmungen (16) der Antriebsbüchse (7) ein,

c) die Paßfeder (15) und deren Befestigung sind über eine im Verriegelungsgehäuse (3) vorgesehene, verschließbare Öffnung zugänglich,

d) der Gewindering (13) ist mit einer Öffnung (12) versehen, in die ein formschlüssig angepaßter Sperriegel (11) zur Verriegelung in axialer Richtung und in Umfangsrichtung einzurasten vermag.

2. Einrichtung nach Anspruch 1, gekennzeichnet durch ein im Verriegelungsgehäuse (3) angeordnetes Sichtfenster (19), welches mit einer Markierung (20) versehen ist, die mit einer entsprechenden, auf der Außenseite des Gewinderinges (13) vorgesehenen Markierung (21) bei Erreichen der Verriegelungsstellung zur Deckung gelangt.

## Claims

1. A device for holding a driving stem of a valve fitting at a preselected stroke setting, the driving stem being operated by way of a rotatable nonrising drive bush (7), comprising a threaded ring (13), which surrounds the bush and which, after the engagement of a sliding element (15) in axially extending recesses (16) provided within the actuating mechanism, may be moved upwards and downwards by turning the driving bush (7) within a locking housing (3) attached to the bonnet of the valve fitting and is able to be axially locked by way of a latch (11) to be operated by means of a key (10), characterized by the combination of the following features :

a) the threaded ring (13) is provided with a male thread and may be turned within a female thread (14) in the locking housing (3) and is arranged so as to be able to move upwards and downwards,

b) the sliding element has the form of a key (15), is detachably mounted in the threaded ring (13) and fits into one of a plurality of circumferential spaced axial recesses (16) in the driving bush (7),

c) the key (15) and the means of attaching it are accessible by way of an opening which is provided in the locking housing (3) and may be closed, and

d) the threaded ring (13) is provided with an aperture (12) into which there may be fitted a locking bolt (11), which is adapted to have an interlocking shape, for providing a locking action in the axial and circumferential directions.

2. The device as claimed in claim 1 characterized by an inspection aperture (19) in the locking housing (3), and which is provided with a mark (20), which is aligned with a corresponding mark (21) on the outer face of the threaded ring (13) when the locking setting has been reached.

## Revendications

1. Dispositif pour le verrouillage d'un positionnement pré-sélectionné de course de tige d'une armature d'arrêt, devant être actionné au moyen d'un manchon d'entraînement (7) rotatif, sans pouvoir ascendant, pourvu d'une bague filetée (13) enrobant le manchon d'entraînement ; cette bague, après enclenchement d'un élément axialement mobile (15) dans les évidements (16) prévus dans le mécanisme d'actionnement et ensuite, par rotation du manchon d'entraînement (7) à l'intérieur du carter de verrouillage (3), placé sur la partie recourbée de l'armature d'arrêt est déplaçable vers le haut et vers le bas et peut être bloquée axialement par un verrou d'arrêt (11) actionné par une clé (10) ; caractérisé par la combinaison des particularités ci-après mentionnées, en l'occurrence :

a) la bague filetée (13) est dotée d'un filetage extérieur avec possibilité de rotation dans le filetage intérieur (14) du carter de verrouillage (3), lui permettant un déplacement ascendant et descendant,

b) l'élément déplaçable a la forme d'une clavette (15) fixée de façon amovible dans la bague filetée (13) et s'enclenche dans l'un des évidements axiaux (16) répartis sur la circonférence du manchon d'entraînement (7),

c) la clavette (15) de même que sa fixation sont accessibles au niveau d'un orifice pouvant être fermé, prévu dans le carter de verrouillage (3),

d) la bague filetée (13) est pourvue d'une ouverture (12) dans laquelle un verrou d'arrêt (11) prévu pour le verrouillage axial et circonférentiel peut s'enclencher.

2. Dispositif selon la revendication 1, caractérisé par voyant (19) placé dans le carter de verrouillage (3), ce voyant étant pourvu d'un repère (20) qui, positionnement de verrouillage obtenu, s'aligne avec le repère (21) placé sur le côté extérieur de la bague filetée (13).

Fig. 1

0 129 085

Fig. 2

Fig. 3

Ansicht X